# EUROPEAN PATENT SPECIFICATION

(11) **EP 1 592 590 B1**
(45) Date of publication and mention of the grant of the patent: **03.11.2010**
(21) Application number: 04705205.5
(22) Date of filing: 26.01.2004
(51) Int. Cl.: B60T 1/06, F16H 3/12, F16D 65/14

(54) **SHAFTBRAKE FOR STAGEGEARED MOTOR VEHICLE GEARBOX WHERE AT A FIRST BRAKE ELEMENT IS INTEGRATED WITH AND CONSTITUTES PART OF THE SHAFT**
WELLENBREMSE FÜR KRAFTFAHRZEUG-STUFENGETRIEBE, BEI DER EIN ERSTES BREMSELEMENT IN DER WELLE INTEGRIERT IST UND EINEN TEIL DAVON BILDET
FREIN DE LIGNE D'ARBRE POUR BOITE DE VITESSE ETAGEE DE VEHICULE A MOTEUR AVEC UN PREMIER ELEMENT DE FREIN FAISANT PARTIE INTEGRANTE DE L'ARBRE

(30) Priority: 04.02.2003 SE 0300289
(43) Date of publication of application: 09.11.2005
(73) Proprietor: VOLVO LASTVAGNAR AB, 405 08 Göteborg (SE)
(72) Inventor: HEDMAN, Anders, S-440 30 Marstrand (SE)
(74) Representative: Fröhling, Werner Otto
(86) International application number: PCT/SE2004/000088
(87) International publication number: WO 2004/069621

(56) References cited:
- DE-C1- 19 652 946
- US-A- 1 851 571
- US-B1- 6 286 633

## Description

### TECHNICAL FIELD OF THE INVENTION

The present invention relates to a device for use in a motor vehicle gearbox according to the preamble to subsequent patent claim 1. The device relates to a shaft brake for braking the rotation of at least one shaft disposed in a stage-geared gearbox.

### PRIOR ART

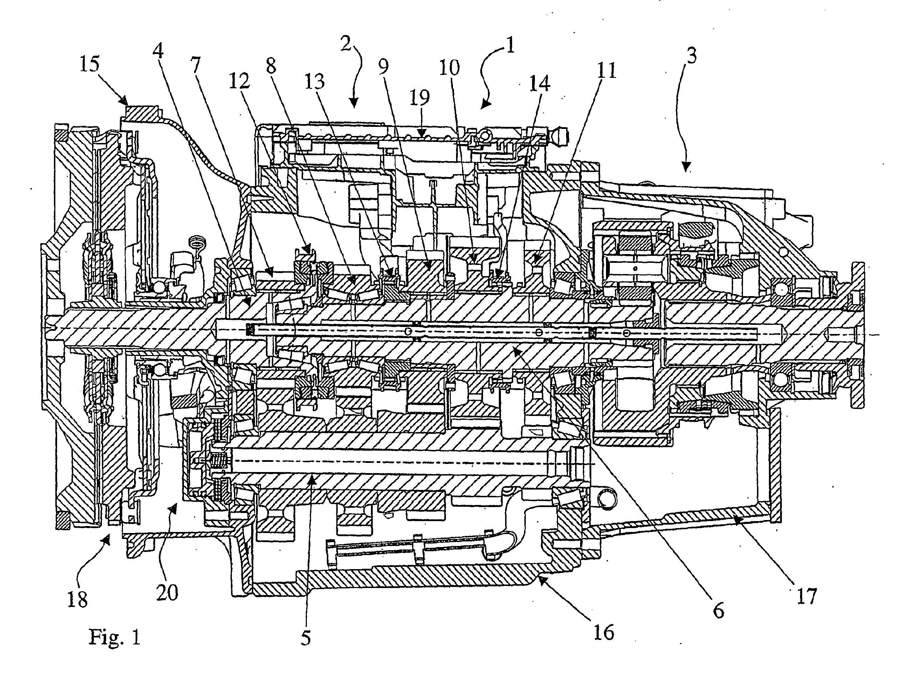

Figure 1 shows a longitudinal section of a typical automatic gearbox 1 for trucks according to the prior art. This comprises a basic gearbox 2, having several possible gearings, and an additional gearbox, a so-called range-change gearbox 3. The latter has a gear mechanism with high gearing and a gear mechanism with no gearing; so-called direct drive. The range-change gearbox 3 doubles, in principle, the number of gears in the basic gearbox 2.

The basic gearbox 2 comprises an input shaft 4, an intermediate shaft 5 and a main shaft 6. The input shaft 4 and the main shaft 6 are provided with a number of bearing-mounted gearwheels, so-called running wheels 7 and 8, 9, 10 and 11 respectively. Each of the running wheels 7, 8, 9 and 10 mates with a corresponding gearwheel which either is connected in a rotationally secure manner to or is integrated in the intermediate shaft 5. The running wheel 11 is used for reverse gears. It is indirectly engaged with the corresponding gearwheel on the intermediate shaft 5 via an intermediate gear (not shown).

Each of the running wheels 7 and 8 can be locked in a rotationally secure manner to the input shaft 4 by means of a gear coupling device 12. This gives two alternative gearings between the input shaft 4 and the intermediate shaft 5. The running wheels 8, 9, 10 and 11 can be similarly locked to the main shaft 6 by means of the gear coupling devices 13 and 14.

According to the example shown in figure 1, the gearbox housing comprises a clutch case 15, a basic housing 16 and a range-change housing 17. Inside the clutch case 15 sits the clutch 18, which is concentric with the input shaft 4. On top of the basic housing 16 sits a regulator unit 19, which, inter alia, attends to the engagement and disengagement of the gear coupling devices 12, 13 and 14. The regulator unit 19 contains an electronic control unit (not shown).

The gear coupling devices can be synchronized, as 12, or non-synchronized, as 13 and 14. A non-synchronized gear coupling device generally has smaller extent in the radial and axial directions than a synchronized version. In addition, it has markedly lower production costs. Whenever a gear is engaged in the gearbox, a running wheel is locked to its shaft in a rotationally secure manner by means of the connecting gear coupling device. Normally there is a difference in rotation speed between the running wheel and the shaft at the start of the engagement process.

A synchronized gear coupling device contains, on the one hand, a brake which equalizes the difference in rotation speed and, on the other hand, a catch which prevents locking, so-called engagement, before this speed difference has been equalized.

With a non-synchronized gear coupling device, the speed difference must generally be equalized differently. Otherwise a rattling noise is generated upon attempted engagement, since a rotation speed difference exists. The gear coupling device might then, moreover, be damaged.

In modern trucks, the engines have an electronic control mechanism. With an automatic gearbox as in figure 1, the electronic control unit in the regulator unit 19 can communicate with the control system of the engine. Whenever a gear is engaged, said difference in rotation speed can be equalized by adjusting the rotation speed of the engine to a suitable value. For reasons of space and cost, modern automatic gearboxes are therefore provided with non-synchronized gear coupling devices.

In one important case, adjustment of the engine cannot, however, be used to equalize the difference in rotation speed in the engagement of a gear coupling device. This is where a gear is engaged when the vehicle is stationary, which can be illustrated on the basis of the gearbox in figure 1. A stationary vehicle is studied in which the engine is rotating, the clutch 18 is engaged and the gearbox 1 is in neutral position, which means that none of the gear coupling devices 13 and 14 are engaged. The input shaft 4 rotates in this case at the speed of the engine. Via one of the running wheels 7 and 8, depending on the position of the gear coupling device 12, the intermediate shaft 5 is made to rotate at a speed which is proportional to that of the engine. The intermediate shaft 5 makes the other running wheels 7 or 8, and 9, 10 and 11, rotate proportionally to the speed of the engine. The main shaft 6 is locked in a rotationally secure manner to the drive wheel of the vehicle and, in the studied case involving a stationary vehicle, does not rotate. A difference in rotation speed is thus obtained between the main shaft 6 and the running wheels 8, 9, 10 and 11.

Whenever a gear is engaged in the basic gearbox 2, the clutch 18 must first be disengaged in order to brake the rotationally secure locking between the engine and the running wheels 8, 9, 10 and 11. Thereafter, the rotation speeds of the running wheels 8, 9, 10 and 11 need to be reduced, so that one of them can be rotation-locked with the main shaft 6 by engagement of one of the gear coupling device 13 and 14. Friction and other motional resistance means that the speeds of the rotating parts in the basic gearbox 2 decrease. It takes several seconds, however, before a gear can be engaged, which is an unacceptably long time.

Automatic gearboxes with non-synchronized gear coupling devices are therefore provided with a so-called gearbox brake 20 in order to produce a faster gear engagement. Such a gearbox brake can also be used to reduce rotation speeds when changing from one gear to a higher gear with lower gearing.

In figure 1, the gearbox brake 20 acts upon the intermediate shaft 5. When the intermediate shaft brake 20 is applied, the rotation speed of the intermediate shaft 5 will be reduced, just as for the running wheels.

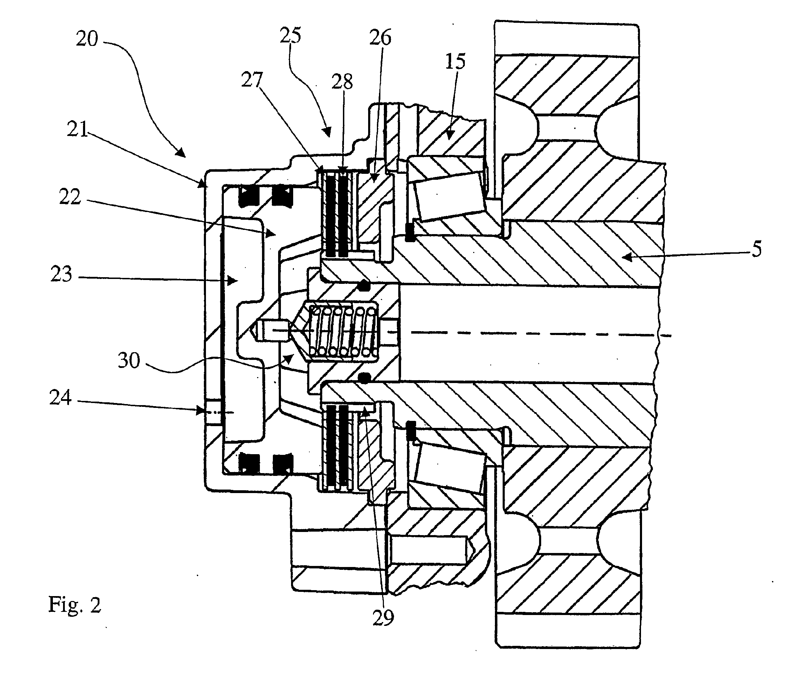

Figure 2 shows the intermediate shaft brake 20 in enlarged representation. In a cap 21, which is screwed in place in the clutch case 15, a piston 22 is placed. When the brake is applied, compressed air is introduced into a chamber 23 through an opening 24 in the cap 21 from a line (not shown). The thereby increased pressure in the chamber 23 transports the piston 22 to the right. The piston 22 will then force a disk assembly 25 against a plate 26. The disk assembly 25 consists alternately of externally toothed disks 27 and inwardly toothed disks 28.

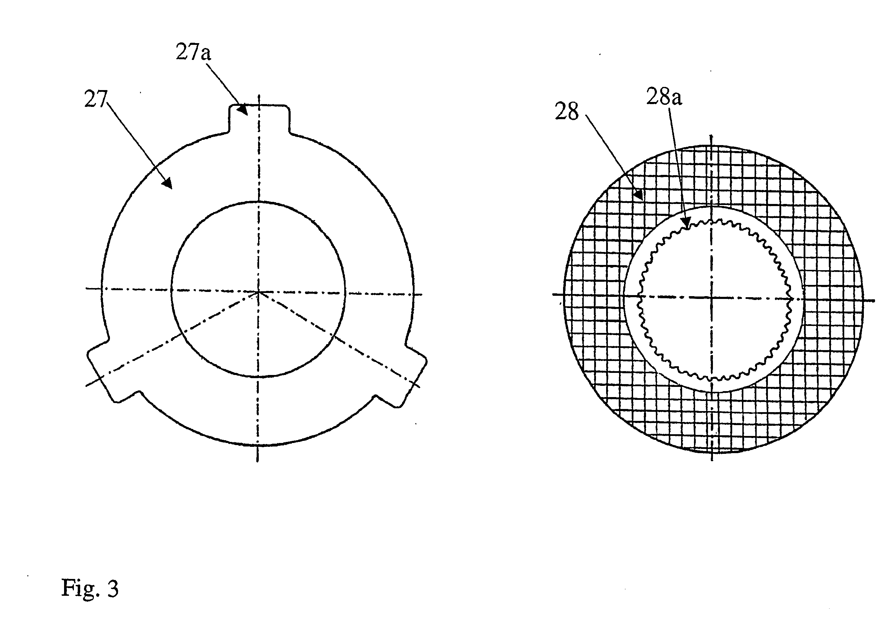

Figure 3 shows an externally toothed disk 27 and an internally toothed disk 28 according to figure 2. The teeth 27a on the externally toothed disks 27 fit in corresponding recesses (not shown) in the cap 21. The externally toothed disks 27 are thereby axially movable but cannot rotate. The internal teeth 28a are engaged with external teeth 29 on the intermediate shaft 5. The internally toothed disks 28 are thus axially movable but are locked in a rotationally secure manner to the intermediate shaft 5. The check pattern in figure 3 on the internally toothed disks 28 represents a friction lining. If the intermediate shaft 5 rotates when the disk assembly 25 is squeezed together between the piston 22 and the plate 26, tangential friction forces will be generated between the non-rotary disks 27 and the rotary disks 28. The friction forces create a torque which is counter-directed to the rotation of the intermediate shaft 5. The rotation speed of the intermediate shaft 5 will therefore be slowed down.

The disk assembly 25 arrangement, whereby a plurality of non-rotary disks 27 have between them disks 28 which rotate with the intermediate shaft 5, means that tangential friction forces are generated at several locations. For a given application force from the piston 22, a high braking torque is then obtained.

In the non-applied state, the compressed air is evacuated from the chamber 23 and a helical spring device 30 forces back the piston 22, so that the disks 27 and 28 in the disk assembly 25 are no longer pressed together.

The known disk-type intermediate shaft brake 20 described in figures 2 and 3 works in most respects satisfactorily. It does, however, have certain drawbacks, which shall be described in greater detail. In the first place, the brake consists of many parts. This results in increased costs and handling problems. In the second place, the assembly is awkward. The externally toothed disks 27 must be passed into recesses in the cap 21 and the intervening internally toothed disks 28 must be passed into the teeth 29 of the intermediate shaft 5. In practice, it has proved necessary to fit the brake only after the basic gearbox 2 has been fitted and the clutch case 15 has been screwed in place in the basic housing 16. A pre-fitting of the gearbox brake 20 in the clutch case 15 has not been practicable. The cap 21 has therefore been unable to be integrated into the clutch case 15, which would have been advantageous. In the third place, a certain friction torque between rotary disks 28 and non-rotary disks 27 is obtained even when the brake is not applied. This produces power loss and increased fuel consumption. The friction torque can be countered with devices which separate the disks when the brake is not applied. Such devices would give rise, however, to still greater problems of cost and assembly. Friction torque is also obtained between the helical spring device 30 and the piston 22, since the helical spring device 30 rotates with the intermediate shaft 5, whilst, the piston 22 does not rotate.

The device according to generic US 3309934 partially eliminates the above drawbacks. US 3309934 shows an intermediate shaft brake having conical braking surfaces 80 and 84 instead of disk plates. In cone brakes, high braking torque is obtained upon application as a result of the wedging effect, in contrast to having a plurality of serially coupled friction surfaces, as in the disk brake described above. This, per se, produces fewer integral parts in the brake itself and simpler assembly. In addition, it is easier to separate rotary and non-rotary parts when the brake is not applied. The power loss can then be kept low.

In US 3309934, the surface 84 is disposed on a piston 82, which, in turn, is axially displaceable, but non-rotatable relative to the cap 62. The piston is prevented from rotating relative to the cap by separate pins 92 disposed in recesses in the cap 62 and the piston 82, respectively. The cap 62 is fixedly disposed on a part 42, which, in turn, is fixedly disposed in a base part 44. The base part 44 is fixedly disposed in the gearbox housing 22. The surface 80 is disposed on a brake part 68, which, in turn, is fixedly disposed in an intermediate shaft 26 through the use of a screw 67. The device according to US3309934 does not have any spring arrangement which returns the piston 82, but rather the arrangement works purely on oil pressure in the chambers 88 and 86 for the advancement and return of the piston 82.

Although the chambers solution in US 3309934 eliminates the friction torque which is generated on the basis of the helical spring arrangement 30 shown in figure 2, another drawback is acquired in return, namely that a dual-chambered system requires a more advanced pressure regulator system. Furthermore, the chambers 88 and 86 are formed by the parts 82, 42, 68, 67 and 62. The spring arrangement is therefore eliminated, but more components are instead needed to form the chambers and regulate the pressure in the two chambers. A large number of integral parts which make up the pressure chambers and connecting lines for the admission/discharge of oil give rise, moreover, to an increased risk of oil leakage.

The conclusion is that both the known brake arrangement shown in figures 1, 2 and 3 and the device according to US 3309934 contain a relatively large number of parts and are therefore relatively dear to produce and assemble. The device according to figures 1, 2 and 3 produces, moreover, a greater risk of friction losses. The device according to US 3309934 gives rise, moreover, to an increased risk of oil leakage. It can further be stated that the solutions according to figures 1, 2 and 3 and US 3309934 can acquire problems with evacuating quickly enough the friction heat which is generated in braking. A risk of overheating therefore exists.

There is therefore a need for a brake arrangement in which friction losses due to different friction torques, the risk of overheating, environmentally harmful oil leakage and the number of integral parts are minimized and in which, moreover, the assembly of the brake arrangement is simplified.

### SUMMARY OF THE INVENTION

The solution to the problem, according to the invention, with due regard to the device according to the invention, is described in patent claim 1. The other patent claims describe preferred embodiments and developments of the device according to the invention (2 to 8).

The device according to the invention comprises a shaft brake for a stage-geared motor vehicle gearbox. The shaft brake comprises a first brake element with friction surface, which brake element is coupled in a rotationally secure manner to the shaft, and a corresponding second brake element coupled in a rotationally secure manner to a gearbox housing and the friction surface of which is intended to interact with the first friction surface by virtue of the first and second brake elements being movable relative to each other in the axial direction, which friction surfaces, upon contact, brake the shaft. The invention is characterized in that the first brake element is integrated with and constitutes part of the shaft.

The advantage with this is that the number of integral components for assembly is reduced. It is possible, moreover, to reduce the number of machining stages in the production of the shaft. For example, when a bearing seat on the shaft is disposed alongside the first friction surface of the shaft, the friction surface and the surface for the bearing seat are machined in the same production stage. Furthermore, a better dispersion is obtained of the friction heat formed during braking, since, relatively speaking, there is a greater quantity of material available, in the form of the shaft, in direct connection to where the friction heat is created. This means that possible overheating problems in the brake are reduced.

According to a first embodiment of the device according to the invention, the cap which constitutes the cylinder of the piston is fixedly disposed directly in the gearbox housing. The cap can constitute an integral part of the gearbox housing.

The advantage with this is that the number of integral components is reduced, at the same time as the assembly is simplified. The cap and the piston can be fitted before the shaft is fitted in the gearbox.

According to a second embodiment of the device according to the invention, a resilient element, for returning the piston and separating the friction surfaces, is disposed between the piston and a rotationally secure part disposed in the gearbox.

The advantage with this is that no friction torque is generated. The power losses are reduced. Furthermore, since a spring arrangement is used to return the piston, no additional pressure chamber is needed for the piston return, nor the associated extra regulator arrangement.

According to a third embodiment of the device according to the invention, the friction surfaces of the first and the second brake element are conical.

The advantage with a cone shape is that a relatively large brake torque is obtained when the brake is applied. The cone shape further offers the possibility of configuring the shaft brake with fewer integral parts in the brake itself. This produces easier assembly. In addition, it is easier to separate rotary and non-rotary parts when the brake is not applied. The power loss due to friction torque can then be kept low.

Further embodiments of the invention can be derived from the contingent patent claims.

### BRIEF DESCRIPTION OF THE DRAWINGS FOR THE INVENTION

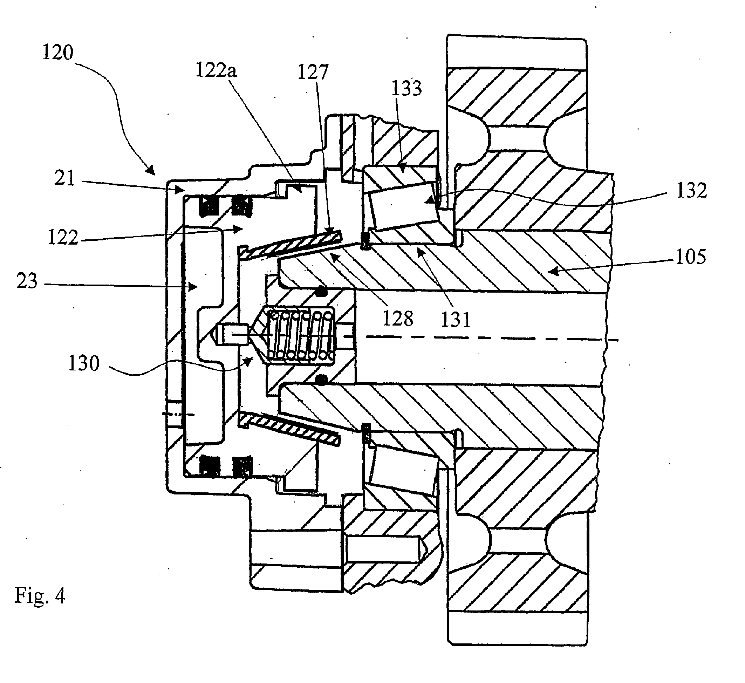

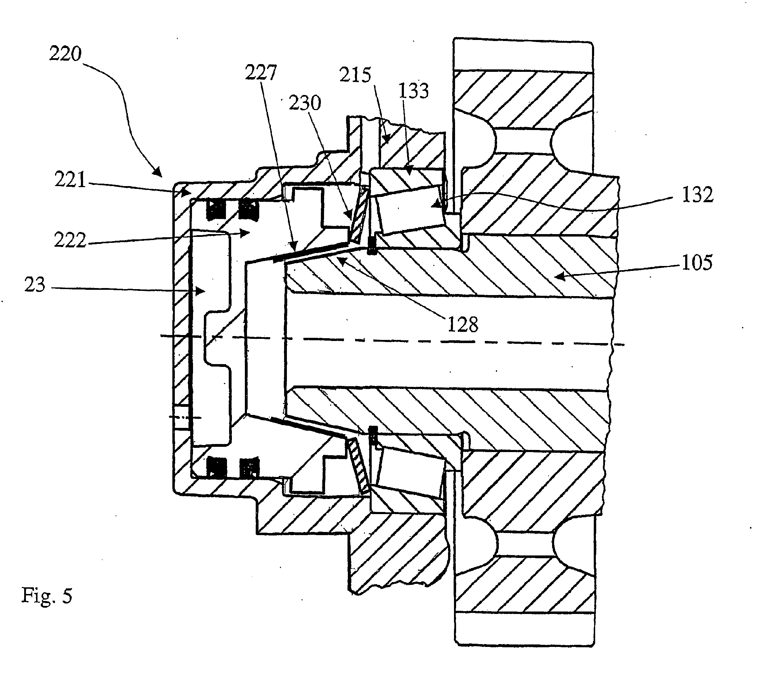

The present invention will be described in greater detail below with reference to the appended figure 4, which shows a longitudinal section of a first embodiment of the shaft brake according to the invention, and figure 5, which shows a longitudinal section of a second embodiment of the shaft brake according to the invention.

### PREFERRED EMBODIMENTS

Figure 4 shows a first embodiment according to the invention of a shaft brake 120. The piston 122 is prevented from rotating by external teeth 122a, which pass into recesses in the cap 21. The first cone element 128 is a conical part of the shaft 105 close to the cylindrical part 131 (bearing seat) in which the bearing 132 is disposed. The parts 128 and 131 can be formed in the same machining operation. The second cone element 127 is a conical sleeve with friction lining, which is fixedly disposed in the piston 122. Few integral parts reduce production and assembly costs. The assembly is simplified since the cap 21 with the piston 122 can be pre-fitted in the clutch case 15. When the brake is not applied, the cone elements 127 and 128 are separated by means of the spring arrangement 130, thereby producing low power loss.

Figure 5 shows an alternative embodiment according to the invention of a shaft brake 220. The second cone element 227 is here integrated in the piston 222. When the brake is not applied, the piston 222 is forced back by a spring arrangement 230, which does not rotate with the shaft 105. Friction losses in the spring arrangement are therefore eliminated. In the illustrated exemplary embodiment, the spring device 230 is constituted by a cup spring 230, which is disposed between the piston 222 and the outer ring 133 of the bearing 132. The piston and the outer ring 133 of the bearing do not rotate relative to each other and therefore no friction torque, with resultant power losses, is generated. Another type of spring, for example a helical spring, can be used instead of a cup spring. The cap 221 is integrated in the clutch case 215, which further minimizes the number of integral parts. Alternatively, the cap 221 could be an integral part of the gearbox housing.

In the embodiments according to figures 4 and 5, the shaft constitutes one part in a pair of surfaces in a friction brake. The cone element 128 is therefore integrated in the shaft. The shaft is well suited to integration of the cone element 128, since the shaft normally is hardened. The integration further reduces the production costs and simplifies the assembly. The shaft brake is especially suited to acting upon an intermediate shaft in a gearbox, though it is also conceivable for the shaft brake to act upon other shafts in the gearbox 1, such as the input shaft 4 or the shaft (not shown) of the rear intermediate gear. Alternatively, the brake could act upon any of the running wheels 7, 8, 9, 10 or 11.

The cone shape of the brake surfaces can be given a different configuration, for example a plate shape, a cup shape or variants of truncated cones, including both plate shape and cone shape.

The invention shall not be considered limited to the exemplary embodiments described above, but rather a number of further variants and modifications are conceivable within the scope of the subsequent patent claims.

## Claims

1. A shaft brake (120, 220) for a stage-geared motor vehicle gearbox (1), wherein the shaft brake (120, 220) comprises a first brake element (128) with friction surface, which brake element (128) is coupled in a rotationally secure manner to a shaft (105), and a corresponding second brake element (127, 227) coupled in a rotationally secure manner to a gearbox housing (215, 15, 16) and the friction surface of which is intended to interact with the first friction surface by virtue of the first and second brake elements (127, 227, 128) being movable relative to each other in the axial direction of the shaft (105), which friction surfaces, upon contact, brake the shaft (105), **characterized in that** the first brake element (128) is integrated with and constitutes part of the shaft (105).

2. The shaft brake as claimed in claim 1, **characterized in that** the second brake element (127, 227) is fixedly disposed on a piston (122, 222), which piston (122, 222) runs in a cap (21, 221), which cap (21, 221) constitutes the cylinder of the piston (122, 222) and is fixedly disposed in the gearbox housing (215, 15, 16).

3. The shaft brake as claimed in the preceding claims, **characterized in that** the piston (122, 222) and the cap (21, 221) constitute a pressure chamber (23) in which a fluid can be pressurized and which fluid thereby displaces the piston (122, 222) axially toward the shaft (105), and **in that** a resilient element (130, 230), for returning the piston (122, 222) and separating the friction surfaces, is disposed between the piston (122, 222) and a rotationally secure part (133) disposed in the gearbox (1).

4. The shaft brake as claimed in the preceding claims, **characterized in that** a cup spring (230) constitutes the resilient element.

5. The shaft brake as claimed in claim 2, **characterized in that** the cap (221) is an integral part and constitutes part of the gearbox housing (215, 15, 16).

6. The shaft brake as claimed in claim 1, **characterized in that** the friction surfaces of the first and the second brake element (127, 227, 128) are cone-shaped.

7. The shaft brake as claimed in claim 2, **characterized in that** the second brake element (127, 227) is integrated with and constitutes part of the piston (122, 222).

8. The shaft brake as claimed in any one of the preceding claims, **characterized in that** said shaft is an intermediate shaft (105) in the gearbox (1).

## Patentansprüche

1. Wellenbremse (120, 220) für ein Stufengetriebe (1) eines Kraftfahrzeugs, wobei die Wellenbremse (120, 220) ein erstes Bremselement (128) mit einer Reibungsfläche, wobei das Bremselement (128) drehfest mit einer Welle (105) gekoppelt ist, und ein entsprechendes zweites Bremselement (127, 227) umfasst, das drehfest mit einem Getriebegehäuse (215, 15, 16) gekoppelt ist und dessen Reibfläche für eine Zusammenwirkung mit der ersten Reibfläche mittels des ersten und zweiten Bremselements (127, 227, 128) bestimmt ist, die bezüglich zueinander in Axialrichtung der Welle (105) bewegbar sind, wobei die Reibflächen bei Kontakt die Welle (105) bremsen, **dadurch gekennzeichnet, dass** das erste Bremselement (128) in die Welle (105) integriert ist und einen Teil der Welle (105) bildet.

2. Wellenbremse nach Anspruch 1, **dadurch gekennzeichnet, dass** das zweite Bremselement (127, 227) fest an einem Kolben (122, 222) angebracht ist, wobei der Kolben (122) in einem Deckel (21 221) läuft, wobei der Deckel (21, 221) den Zylinder des Kolbens (122, 222) bildet und fest in dem Getriebegehäuse (215, 15, 16) angebracht ist.

3. Wellenbremse nach einem der vorhergehenden Ansprüche, **dadurch gekennzeichnet, dass** der Kolben (122, 222) und der Deckel (21, 221) eine Druckkammer (23) bilden, in der ein Fluid unter Druck gesetzt werden kann, und wobei das Fluid hierdurch den Kolben (122, 222) axial in Richtung der Welle (105) verschiebt, und dass ein elastisches Element (130, 230) für eine Rückholung des Kolbens (122, 222) und für eine Trennung der Reibungsflächen zwischen dem Kolben (122, 222) und einem drehfesten Teil (133) angeordnet ist, das in dem Getriebe (1) angeordnet ist.

4. Wellenbremse nach einem der vorhergehenden Ansprüche, **dadurch gekennzeichnet, dass** eine Tellerfeder (230) das elastische Element bildet.

5. Wellenbremse nach Anspruch 2, **dadurch gekennzeichnet, dass** der Deckel (221) einteilig ist und einen Teil des Getriebegehäuses (215, 15, 16) bildet.

6. Wellenbremse nach Anspruch 1, **dadurch gekennzeichnet, dass** die Reibungsflächen des ersten und des zweiten Bremselements (127, 227, 128) konusförmig sind.

7. Wellenbremse nach Anspruch 2, **dadurch gekennzeichnet, dass** das zweite Bremselement (127, 227) in den Kolben (122, 222) integriert ist und einen Teil des Kolbens bildet (122, 222).

8. Wellenbremse nach einem der vorhergehenden Ansprüche, **dadurch gekennzeichnet, dass** die Welle eine Zwischenwelle (105) in dem Getriebe (1) ist.

## Revendications

1. Frein mécanique (120, 220) pour une boîte de vitesses étagée (1) de véhicule à moteur, dans lequel le frein mécanique (120, 220) comprend un premier élément de frein (128) possédant une surface de frottement, cet élément de frein (128) étant couplé à un arbre (105) de manière sécurisée en rotation, et un second élément de frein (127, 227) correspondant couplé à un carter de boîte de vitesses (215, 15, 16) de manière sécurisée en rotation, dont la surface de frottement est destinée à interagir avec la première surface de frottement en raison du fait que les premier et second éléments de frein (127, 227, 128) peuvent être déplacés les uns par rapport aux autres dans la direction axiale de l'arbre (105), ces surfaces de friction frein de l'arbre par contact (105), **caractérisé en ce que** le premier élément de frein (128) est intégré à l'arbre (105) et en constitue une pièce.

2. Frein mécanique selon la revendication 1, **caractérisé en ce que** le second élément de frein (127, 227) est agencé fixe sur un piston (122, 222), lequel piston (122, 222) circule dans une chape (21, 221), laquelle chape (21, 221) constitue le cylindre du piston (122, 222) et est agencée fixe dans le carter de boîte de vitesses (215, 15, 16).

3. Frein mécanique selon l'une quelconque des revendications précédentes, **caractérisé en ce que** le piston (122, 222) et la chape (21, 221) constitue une chambre de pression (23) dans laquelle un fluide peut être mis sous pression, ce fluide déplaçant ainsi le piston (122, 222) de manière axiale vers l'arbre (105), et un élément résilient (130, 230) est agencé entre le piston (122, 222) et une partie (133) sécurisée en rotation et agencée dans la boîte de vitesses (1), afin de faire revenir le piston (122, 222) et séparer les surfaces de frottement.

4. Frein mécanique selon l'une quelconque des revendications précédentes, **caractérisé en ce qu'**un ressort Belleville (230) constitue l'élément résiliant.

5. Frein mécanique selon la revendication 2, **caractérisé en ce que** la chape (221) fait partie intégrante du carter de boîte de vitesses (215, 15, 16) et en constitue une pièce.

6. Frein mécanique selon la revendication 1, **caractérisé en ce que** les surfaces de frottement du premier et du second éléments de frein (127, 227, 128) sont en forme de cône.

7. Frein mécanique selon la revendication 2, **caractérisé en ce que** le second élément de frein (127, 227) est intégré au piston (122, 222), et en constitue une pièce.

8. Frein mécanique selon l'une quelconque des revendications précédentes, **caractérisé en ce que** ledit arbre est un arbre intermédiaire (105) de la boîte de vitesses (1).
